# EUROPÄISCHE PATENTSCHRIFT

(11) **EP 4 552 792 B1**
(45) Veröffentlichungstag und Bekanntmachung des Hinweises auf die Patenterteilung: **11.02.2026**
(21) Anmeldenummer: 23208734.6
(22) Anmeldetag: 09.11.2023
(51) Int. Cl.: B23Q 1/28, B23Q 16/10, B25B 5/06, F16D 55/12

(54) **ELASTISCHES ELEMENT FÜR EINE KLEMM- UND/ODER BREMSVORRICHTUNG**
ELASTIC ELEMENT FOR A CLAMPING AND/OR BRAKING DEVICE
ÉLÉMENT ÉLASTIQUE POUR DISPOSITIF DE SERRAGE ET/OU DE FREINAGE

(43) Veröffentlichungstag der Anmeldung: 14.05.2025
(73) Patentinhaber: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(56) Entgegenhaltungen:
- EP-B1- 1 585 616
- EP-B1- 1 651 881
- CN-A- 107 127 360

## Beschreibung

### TECHNISCHES GEBIET

Die Erfindung betrifft ein elastisches Element für eine Klemm- und/oder Bremsvorrichtung und eine pneumatische Klemm- und/oder Bremsvorrichtung mit zwei oder mehr solcher elastischen Elemente.

### HINTERGRUND DER ERFINDUNG

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Elemente, insbesondere federnde Platten, mit Druckluft beaufschlagt und können einige der genannten Nachteile von hydraulischen Klemmvorrichtungen überwinden.

EP 1585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass die Gummierung von Federplatten beim Beaufschlagen mit Überdruck verdrängt werden und sich (radial nach außen) wölben und dadurch die Klemme undicht machen können.

### KURZBESCHREIBUNG DER ERFINDUNG

Ausgehend von dem eingangs genannten Stand der Technik liegt der Erfindung die Aufgabe zugrunde, Mittel bereitzustellen, die die Dichtheit einer Klemm- und/oder Bremsvorrichtung erhöhen.

Die Erfindung löst diese Aufgabe mit einem elastischen Element mit den Merkmalen des unabhängigen Patentanspruchs 1 und mit einer Klemm- und/oder Bremsvorrichtung mit den Merkmalen des Patentanspruchs 6. Einige der bevorzugten Ausführungsformen sind in den abhängigen Ansprüchen, in der Beschreibung und in den Figuren beschrieben.

Entsprechend der erfindungsgemäßen Lösung wird ein vorzugsweise ringförmiges elastisches Element für eine Klemm- und/oder Bremsvorrichtung vorgeschlagen, das elastische Element umfassend: eine Federplatte mit einer ersten Seitenfläche und einer der ersten Seitenfläche abgewandten, zweiten Seitenfläche; eine auf der zweiten Seitenfläche der Federplatte aufgebrachte Dichtungsschicht aus einem elastischen Material, die Dichtungsschicht umfassend: einen, entlang eines Umfangs der Federplatte verlaufenden (z.B. inneren oder äußeren) Rand; und einen sich (z.B. nach außen bzw. innen) an den Rand der Dichtungsschicht angrenzenden, und entlang zumindest eines Teils des Umfangs der Federplatte verlaufenden, ersten Bereich, der gegenüber dem Rand eine geringere Dicke aufweist; wobei der erste Bereich entlang des Umfangs der Federplatte einen ersten Abschnitt und einen zweiten, an den ersten Abschnitt (z.B. in Umfangsrichtung) angrenzenden Abschnitt aufweist, wobei der erste Abschnitt eine größere Dicke aufweist als der zweite Abschnitt.

Der erste Bereich hat gegenüber dem Rand eine geringere Dicke, um so, bei Verwendung in der Klemm- und/oder Bremsvorrichtung, Raum für einen Druckraum in der Vorrichtung zu schaffen, während eine Auflagerfläche am Rand entsteht, mit der das elastische Element auf ein anderes gleichartiges elastisches Element in der Vorrichtung aufgelegt werden kann. Auch ist dies vorteilhaft für die Dynamik der Klemm- und/oder Bremsvorrichtung. Dadurch, dass der erste Bereich entlang des Umfangs der Federplatte einen ersten Abschnitt und einen zweiten, an den ersten Abschnitt angrenzen Abschnitt aufweist, wobei der erste Abschnitt eine größere Dicke aufweist als der zweite Abschnitt, wird ein Verdrängen des Rands der Dichtungsschicht (z.B. radial nach innen bei einem inneren Rand oder radial nach außen bei einem äußeren Rand) zumindest gehemmt oder gar gänzlich verhindert. Dadurch wird eine Undichtheit beim Betrieb der Klemm- und/oder Bremsvorrichtung verhindert, ohne, dass Zusatzkomponenten in das Gehäuse der Vorrichtung zum Aufbauen einer Gegenkraft gegen den Rand einzuführen sind, was die Herstellung der Vorrichtung einfach hält. Auch werden durch den ersten Abschnitt die dynamischen Eigenschaften des elastischen Elements nicht nachteilig beeinträchtigt. Besonders wirksam ist der erste Abschnitt, wenn der erste Abschnitt mindestens 0,1 mm dicker ist als der zweite Abschnitt. Der erste Abschnitt ist weniger dick als der Rand, da der erste Abschnitt Teil des ersten Bereichs ist.

Bevorzugt umfasst die Dichtungsschicht ferner einen sich (z.B. nach außen bei einem inneren Rand oder nach innen bei einem äußeren Rand) an den ersten Bereich der Dichtungsschicht angrenzenden, und entlang zumindest eines Teils des Umfangs der Federplatte verlaufenden, zweiten Bereich, wobei die Dicke des zweite Bereichs der Dichtungsschicht mindestens so groß ist wie die Dicke des ersten Abschnitts des ersten Bereichs. Dadurch dient der erste Abschnitt als eine Art Brücke zwischen dem Rand und dem zweiten Bereich und verbindet diese beiden Elemente miteinander, was sich besonders vorteilhaft für die Reduktion der Undichtheit auswirkt.

Bevorzugt sind Federplatte und die Dichtungsschicht jeweils ringförmig ausgestaltet.

Die Dichtungsschicht eines erfindungsgemäßen ringförmigen elastischen Elements umfasst vorzugsweise ferner: einen weiteren (z.B. äußeren oder inneren) Rand entlang des Umfangs des (äußeren oder inneren) Kreises des Rings; einen sich an den weiteren Rand der Dichtungsschicht angrenzenden, und entlang zumindest eines Teils des Umfangs des Kreises verlaufenden, dritten Bereich, der gegenüber dem weiteren Rand eine geringere Dicke aufweist; wobei der dritte Bereich entlang des Umfangs des Kreises einen dritten Abschnitt und einen vierten, an den dritten Abschnitt angrenzen Abschnitt aufweist, wobei der dritte Abschnitt eine größere Dicke aufweist als der vierte Abschnitt. Dadurch wird ein Verdrängen des weiteren Rands der Dichtungsschicht (z.B. radial nach außen oder innen, je nach Art des Rands) zumindest gehemmt oder gar gänzlich verhindert. Dadurch wird auch dort eine Undichtheit beim Betrieb der Klemm- und/oder Bremsvorrichtung verhindert, ohne, dass Zusatzkomponenten in das Gehäuse der Vorrichtung zum Aufbauen einer Gegenkraft gegen den weiteren Rand einzuführen sind, was die Herstellung der Vorrichtung einfach hält. Besonders wirksam ist der dritte Abschnitt, wenn der dritte Abschnitt mindestens 0,1 mm dicker ist als der vierte Abschnitt. Der dritte Abschnitt ist weniger dick als der Rand.

Bevorzugt nimmt eine Ausdehnung des ersten und oder dritten Abschnitts der Dichtungsschicht in Umfangsrichtung zum betreffenden Rand hin, vorzugsweise kontinuierlich, ab. Der erste und/oder dritte Abschnitt der Dichtungsschicht kann sich bevorzugt in Richtung des betreffenden Randes verjüngen. Dies ermöglicht die oben beschriebenen Effekte zur Reduktion der Undichtheit zu realisieren bei gleichzeitiger Reduktion des eingesetzten zusätzlichen Materials und Reduktion der Beschränkung des Druckraumes. Der erste und/oder dritte Abschnitt der Dichtungsschicht kann bevorzugt zungenförmig, trapezförmig oder dreieckig sein.

Besonders bevorzugt weist der erste Bereich entlang des Umfangs der Federplatte eine Vielzahl solcher aneinander angrenzender ersten und zweiten Abschnitte aufweist und/oder wobei der dritte Bereich entlang des Umfangs des inneren Kreises (der Ringform) eine Vielzahl solcher aneinander angrenzender dritten und vierten Abschnitte auf. Statt nur einem ersten bzw. dritten Abschnitt werden so eine Vielzahl solcher Verdickungen in der Dichtungsschicht an den ein oder mehreren Rändern vorgesehen, die die oben beschriebenen Effekte zur Reduktion bzw. Verhinderung von Undichtheiten noch verstärken.

Jeder des ersten, zweiten und/oder dritten Bereichs kann ringförmig sein (z.B. einer, zwei oder alle drei Bereiche). Jeder der hier beschriebenen Ränder der Dichtungsschicht kann ringförmig sein (z.B. einer oder alle Ränder).

Entsprechend der erfindungsgemäßen Lösung wird ferner eine Klemm- und/oder Bremsvorrichtung zum Klemmen und/oder Bremsen eines zu klemmenden und/oder bremsenden Objekts bereitgestellt, wobei in der Vorrichtung Folgendes umfasst: ein erstes erfindungsgemäßes elastische Element und ein zweites erfindungsgemäßes elastische Element; ein Gehäuse umfassend ein erstes Gehäuseteil mit einer Innenfläche und ein zweites Gehäuseteil mit einer Innenfläche, wobei die Gehäuseteile derart zueinander angeordnet und miteinander befestigt sind, dass die Innenflächen der Gehäuseteile zusammen einen Innenraum innerhalb des Gehäuses abgrenzen; ein oder mehrere Klemmelemente, wobei jedes Klemmelement eine Klemmfläche aufweist; eine in dem Innenraum angeordnete Feder umfassend das erste elastische Element und das zweite elastische Element, wobei die Federplatte des ersten elastischen Elements mit dessen erster Seitenfläche zugewandt zu der Innenfläche des ersten Gehäuseteils in dem Innenraum eingeklemmt ist, und wobei die Federplatte des zweiten elastischen Elements mit dessen erster Seitenfläche zugewandt zu der Innenfläche des zweiten Gehäuseteils in dem Innenraum eingeklemmt ist, so dass in dem Innenraum ein Druckraum zwischen den Dichtungsschichten der elastischen Elemente gebildet wird, wobei der Druckraum entlüftbar ist und belüftbar oder mit Überdruck eines dem Gehäuse zuführbaren Druckmediums beaufschlagbar ist; wobei die Feder ausgelegt ist, dass bei Be- oder Entlüften des Druckraums oder Beaufschlagung des Druckraums mit Überdruck, eine Biegung mindestens einer der Federplatten der elastischen Elemente veränderbar ist und dadurch die Vorrichtung zwischen einem geöffneten Zustand, in dem ein zu klemmendes Objekt von den ein oder mehreren Klemmflächen beabstandet ist, und einem geschlossenen Zustand, in dem mindestens eine der ein oder mehreren Klemmflächen eine Klemm- und/oder Bremskraft auf das Objekt übertragen, wechselt; und wobei die Dicke des ersten Abschnitts des ersten Bereichs der Dichtungsschicht zumindest eines der elastischen Elemente derart ausgewählt ist, dass bei Belüften des Druckraums oder Beaufschlagung des Druckraums mit Überdruck ein (z.B. radial nach Innen oder Außen gerichtetes) Verdrängen des Rands der Dichtungsschicht des zumindest einen elastischen Elements zumindest gehemmt wird.

Zusätzlich zu den oben genannten Vorteilen des elastischen Elements für die Dichtheit der Vorrichtung unter Vermeidung der Einführung von zusätzlichen Komponenten in die Gehäuseteile, haben die erfindungsgemäßen elastischen Elemente im Rahmen einer solchen Vorrichtung noch weitere Vorteile.

Der Rand der Dichtungsschicht kann sich in einen Anschluss zu Beaufschlagung eines Druckraums wölben, wodurch Risse entstehen können und die Vorrichtung stärker undicht wird. Das Druckmedium kann dadurch entweichen und die Vorrichtung kann trotz Aktivierung nicht von einem Zustand in den anderen Zustand wechseln, zum Beispiel kann in einem solchen Fall einer Undichtheit die Vorrichtung immer im geschlossenen Zustand verharren. Auch kann das Druckmedium durch die Undichtheit von dem Druckraum ungewollt in einen externen Anschluss der Vorrichtung strömen, wodurch der Betrieb der Vorrichtung gestört und die damit verwendeten Pumpen gestört werden können. Dies hat auch negative Auswirkungen auf die Sicherheit im Zusammenhang mit dem zu klemmenden bzw. zu bremsenden Objekt. Bevorzugt ist deshalb der erste Abschnitt der Dichtungsschicht im Bereich eines Gehäuseanschlusses der Klemm- und/oder Bremsvorrichtung zum Beaufschlagen eines Druckraumes mit Überdruck angeordnet.

Bevorzugt ist das elastische Material, aus dem die Dichtungsschicht besteht, aus Gummi, insbesondere Acrylnitril-Butadien-Kautschuk (NBR). Bevorzugt ist der Druckverformungsrest des NBR-Gummis um 50 % reduziert, um eine besonders stabile und dauerhafte Betriebssicherheit herzustellen. Bevorzugt ist die Dichtungsschicht mittels Vulkanisierung auf die Federplatte aufgebracht und dort befestigt, was besonders stabil und langlebig ist.

Das lange Zeit nicht überwundene Problem des störanfälligen Bereichs im Bereich eines Rands einer Dichtungsschicht eines elastischen Elements konnte durch diese Erfindung überwunden werden.

Durch die hier beschriebenen Mitteln einzeln und in Kombination können Klemmen bereitgestellt werden, die verlässlichen und effektiv im Bereich eines Rands einer Dichtungsschicht eines elastischen Elements für das Druckmedium abdichten, ohne, dass dadurch Zusatzkomponenten in das Gehäuse der Klemme eingebaut werden müssen. Auch wird durch das erfindungsgemäße elastische Element die Dynamik der Klemme nicht beeinträchtigt.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine nach innen gerichtete erfindungsgemäße pneumatische Klemm- und/oder Bremsvorrichtung in dreidimensionaler Darstellung.
Figuren 5B bis 5D zeigen eine Variante eines aus Figur 5A entnommenen Gehäuseteils mit elastischem Element.
Figur 6 zeigt eine Ausführung eines Gehäuseteils einer nach innen gerichteten erfindungsgemäßen pneumatische Klemm- und/oder Bremsvorrichtung.
Figuren 7A bis 7C zeigen eine Ausführung des erfindungsgemäßen elastischen Elements.
Figur 8 zeigt ein Ausschnitt eines Querschnitts einer erfindungsgemäßen Klemm- und/oder Bremsvorrichtung mit zwei erfindungsgemäßen elastischen Elementen.

Bauteile, die in mehreren Figuren dargestellt sind, tragen dieselben Referenzzeichen.

### DETAILLIERTE BESCHREIBUNG

Die Erfindung betrifft ein ringförmiges elastisches Element sowie ein Gehäuseteil für eine pneumatische Klemm- und/oder Bremsvorrichtung und eine pneumatische Klemm- und/oder Bremsvorrichtung mit solch einem ringförmigen elastischen Element.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

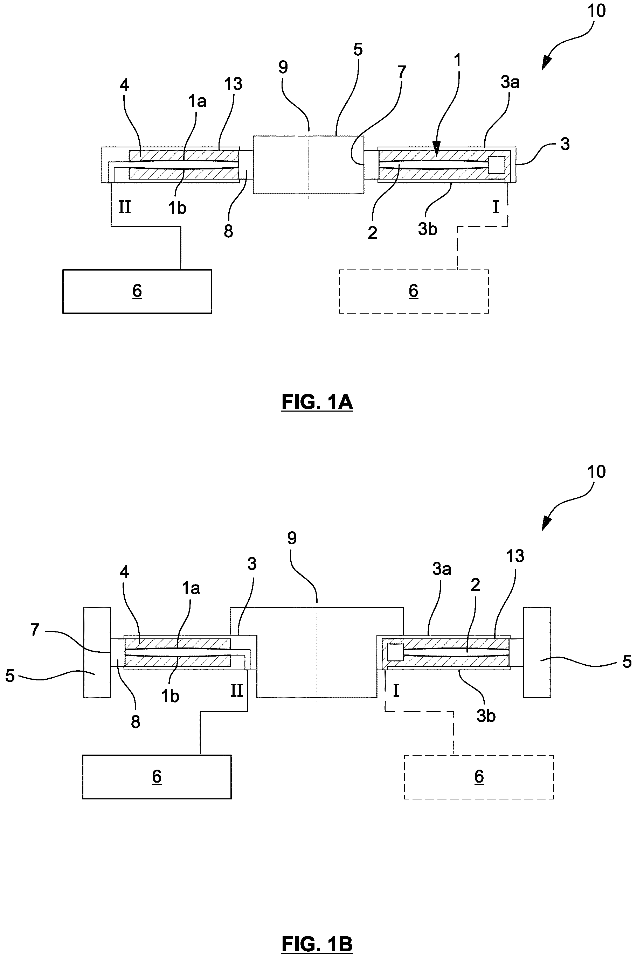

Die Figuren 1A bis 5A und 8 zeigen schematisch Querschnitte durch eine solche erfindungsgemäße Klemmvorrichtung 10 mit einem Gehäuse 3, das zwei Gehäuseteile 3a, 3b umfasst, sowie mit einer in dem Gehäuse 3 angeordneten Feder 1, die mindestens zwei erfindungsgemäße ringförmige elastische Elemente 1a, 1b umfasst.

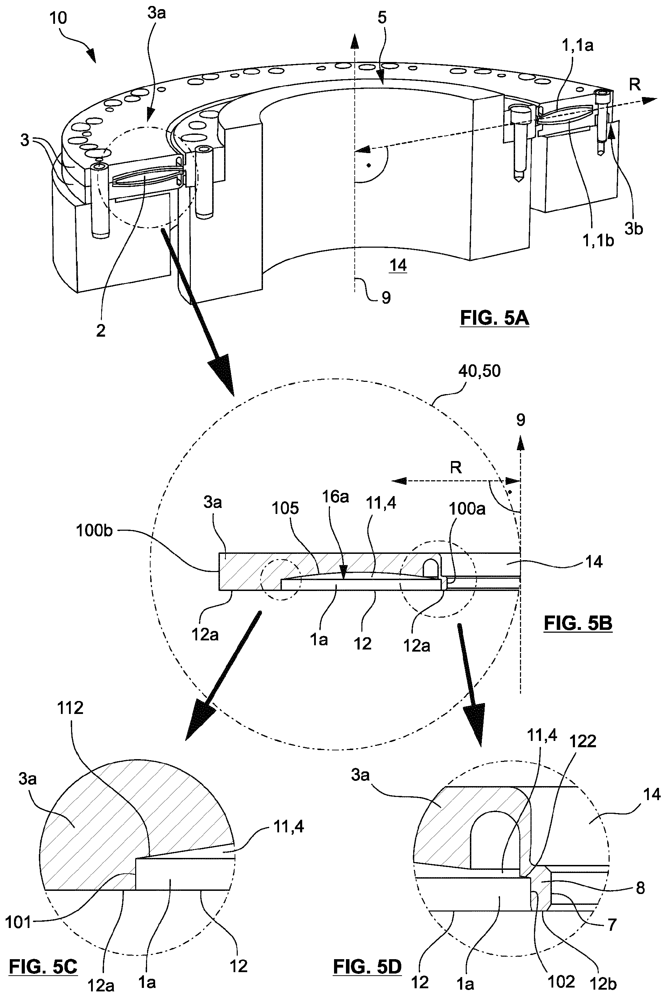

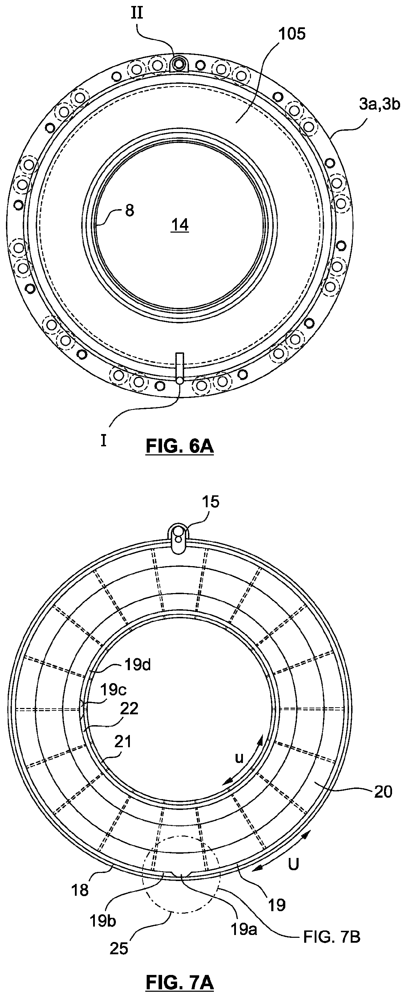

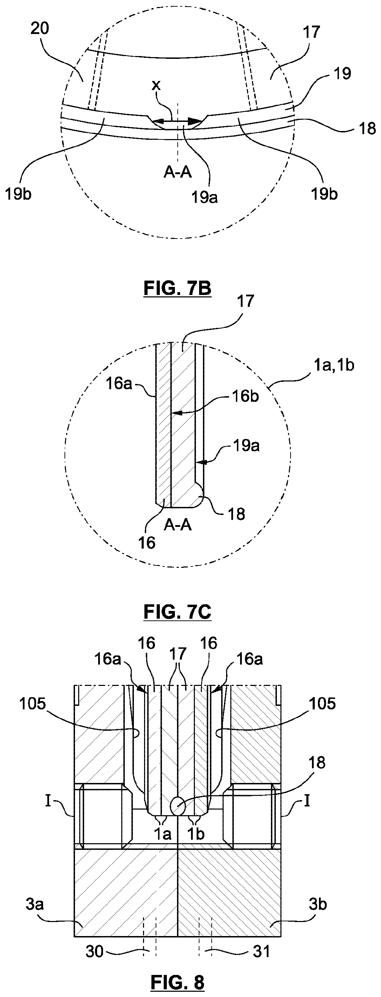

Die erfindungsgemäße Klemmvorrichtung 10, umfasst dabei Folgendes: ein erstes erfindungsgemäßes elastische Element 1a und ein zweites erfindungsgemäßes elastische Element 1b; ein Gehäuse 3 umfassend ein erstes Gehäuseteil 3a mit einer Innenfläche und ein zweites Gehäuseteil 3b mit einer Innenfläche (vgl. 105 in Fig. 5A), wobei die Gehäuseteile derart zueinander angeordnet und miteinander befestigt sind, dass die Innenflächen der Gehäuseteile 3a, 3b zusammen einen Innenraum innerhalb des Gehäuses 3 abgrenzen; ein oder mehrere Klemmelemente 8, wobei jedes Klemmelement eine Klemmfläche 7 aufweist; eine in dem Innenraum angeordnete Feder 1 umfassend das erste elastische Element 1a und das zweite elastische Element 1a, wobei die Federplatte (vgl. 16 in Fig. 7C) des ersten elastischen Elements 1a mit dessen erster Seitenfläche (vgl. 16a in Fig. 5A) zugewandt zu der Innenfläche des ersten Gehäuseteils 3a in dem Innenraum eingeklemmt ist, und wobei die Federplatte des zweiten elastischen Elements 1a, 1b mit dessen erster Seitenfläche zugewandt zu der Innenfläche des zweiten Gehäuseteils 3b in dem Innenraum eingeklemmt ist, so dass in dem Innenraum ein Druckraum 2 zwischen den Dichtungsschichten 17 der elastischen Elemente 1a, 1b gebildet wird, wobei der Druckraum 2 entlüftbar ist und belüftbar oder mit Überdruck eines dem Gehäuse zuführbaren Druckmediums beaufschlagbar ist; wobei die Feder 1 ausgelegt ist, dass bei Be- oder Entlüften des Druckraums 2 oder Beaufschlagung des Druckraums 2 mit Überdruck, eine Biegung mindestens einer der Federplatten 16 der elastischen Elemente 1a, 1b veränderbar ist und dadurch die Vorrichtung 10 zwischen einem geöffneten Zustand, in dem ein zu klemmendes Objekt 5 von den ein oder mehreren Klemmflächen 7 beabstandet ist, und einem geschlossenen Zustand, in dem mindestens eine der ein oder mehreren Klemmflächen 7 eine Klemm- und/oder Bremskraft auf das Objekt 5 übertragen, wechselt. Die erfindungsgemäße Vorrichtung 10 umfasst ferner die eingangs erwähnten Mittel des erfindungsgemäßen elastischen Elements, die einen verbesserte Abdichtung im Bereich ein oder mehrerer Ränder der Dichtungsschicht des elastischen Elements bewirken. Diese Mittel werden im Zusammenhang mit den Figuren 7 bis 8 näher erläutert.

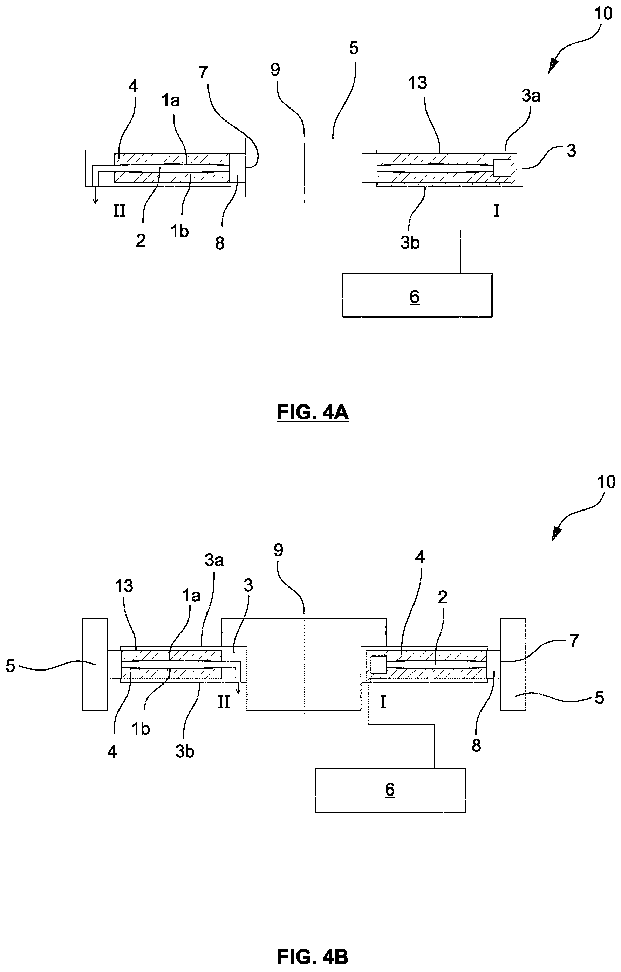

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt.

Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

Die Klemmkraft bzw. -wirkung der Klemmfläche 7 auf das zu klemmende Objekt 5 erfolgt in einer Klemmebene, die durch zwei Vektoren aufgespannt wird, die jeweils einen Radius der ringförmigen elastische Elemente 1a, 1b bzw. ringförmigen Aussparung 11 bilden (vgl. Fig. 5A). Die Achse 9 kann durch den Mittelpunkt des Rings der hier als ringförmig beschriebenen Bauteile verlaufen und kann daher als Hauptachse der Klemmvorrichtung 10 bezeichnet werden, die senkrecht zur Klemmebene verlaufen kann. Wenn in diesem Dokument von "innerem" und "äußerem" Bereich, Rand oder Ende gesprochen wird, so sind innerer Rand, innerer Bereich oder inneres Ende näher an der Achse 9 als entsprechend äußerer Rand, äußerer Bereich oder äußeres Ende. Entsprechendes kann, muss aber nicht, auch für andere Bauteile gelten.

Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5A, 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise ausfüllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann die Klemmfläche 7 gegen das Objekt 5 drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Anschluss I (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

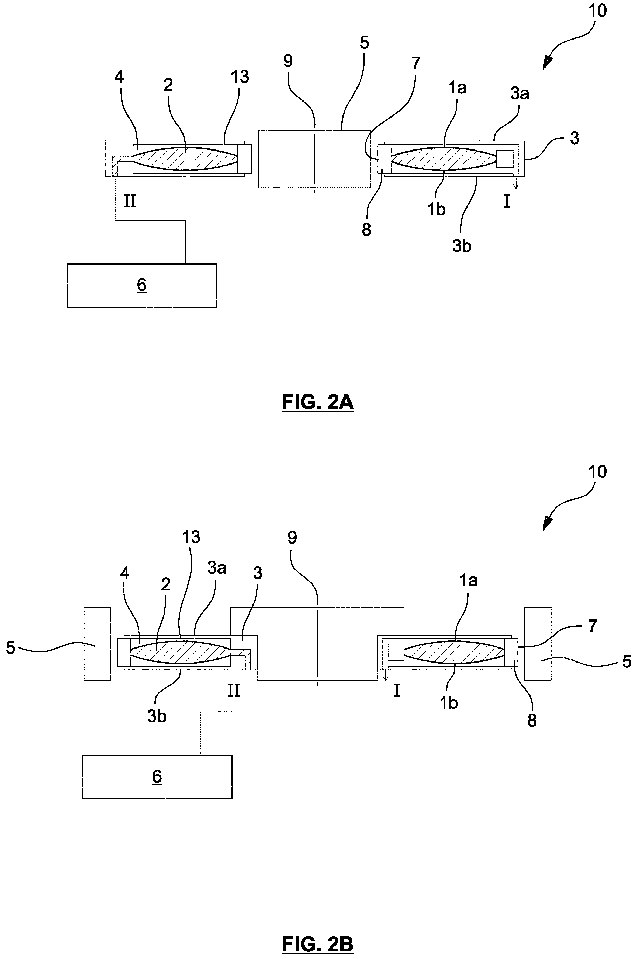

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts 5 beabstandet ist. Der innere Druckraum 2 kann mittels einer Öffnung im Gehäuse 3 mit einem Anschluss 11 (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt elastische Elemente 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende elastische Elemente 1a, 1b die Feder 1 und den innere Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die elastischen Elemente 1a, 1b können, zumindest im Bereich von Schlitzen, mit Gummi beschichtet sein, um die für die Druckluft nötige Dichtheit herzustellen. Die elastischen Elemente 1a, 1b sind generell so druckfest und so elastisch biegbar ausgebildet und in dem Gehäuse 3 der Klemmvorrichtung 10 derart angeordnet, dass innerhalb der Feder 1 zwischen den elastischen Elemente 1a, 1b der innere Druckraum 2 gebildet wird und zwischen eines jeden elastischen Elements 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

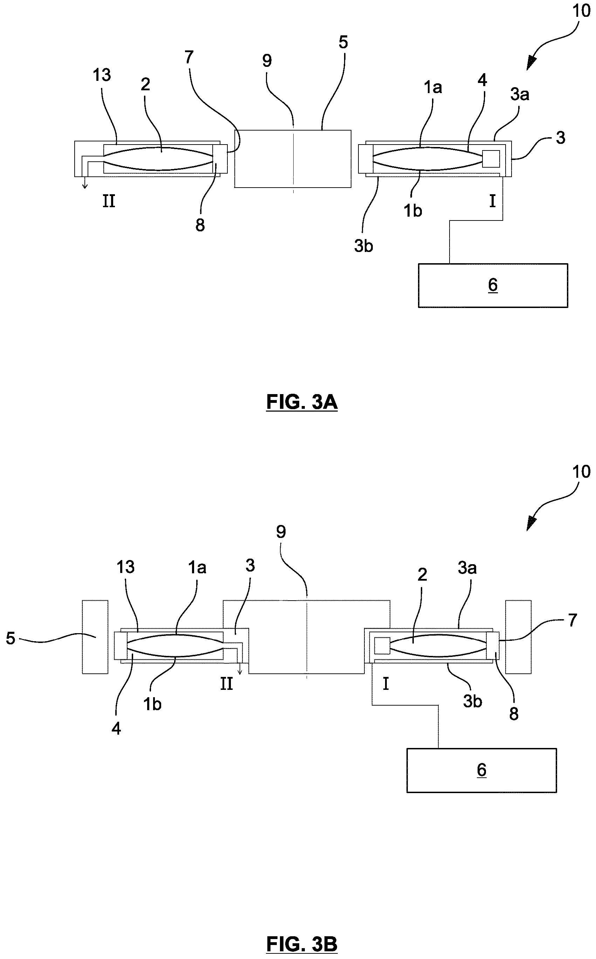

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der elastischen Elemente 1a, 1b angepasst sein oder diese definieren. Eine entsprechende Anschlagsfläche für die elastischen Elemente 1a, 1b kann beispielsweise durch eine Gehäuseinnenwandung gebildet werden. Die Gehäuseinnenwandung kann komplementär (z.B. konkav) zu einer (z.B. konvexen) Verbiegung der elastischen Elemente 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der elastischen Elemente 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der elastischen Elemente 1a, 1b im drucklosen Ausgangszustand kann zu einem geöffneten Zustand der Klemmvorrichtung 10 im drucklosen Ausgangszustand führen. Auch bei plastischer Verformung sind die elastischen Elemente 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figur 5A dargestellt, umfasst das Gehäuse 3 der erfindungsgemäßen Klemmvorrichtungen 10 zwei Gehäuseteile 3a, 3b, die mit Befestigungsmittel, wie etwa Schrauben, miteinander befestigt und so montiert sind, dass im montierten Zustand die beiden Gehäuseteile 3a, 3b den Innenraum 13 zwischen den Gehäuseteilen 3a, 3b innerhalb des Gehäuses 3 definieren in dem die Feder 1 samt deren erfindungsgemäßer ringförmigen elastischen Elemente 1a, 1b angeordnet sind. Die Gehäuseteile 3a, 3b definieren jeweils eine Aussparung 11, die ebenfalls ringförmig ist und die der Aufnahme der ringförmigen elastischen Elemente 1a, 1b dienen, wie in Figuren 5A bis 5D dargestellt. Zumindest ein Teil der ersten Anlagefläche 101 des Gehäuseteils kann (im Wesentlichen) senkrecht zur radialen Richtung R der ringförmigen Aussparung 11 verlaufen und/oder ein Teil der zweiten Anlagefläche 102 des Gehäuseteils kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5A, 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A, 8 verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eine Ausführung der erfindungsgemäßen Komponente 40, 50 (hier mit dem oberen Gehäuseteil 3a aus Fig. 5A), wobei das betreffende Gehäuseteil 3a der Komponente eine ringförmige Aussparung 11 zum Einklemmen des ringförmigen elastischen Elements 1a aufweist, und wobei das Gehäuseteil 3a eine durch die Aussparung 11 definierte Innenfläche (vgl. 105 in Fig. 6) aufweist. Die ringförmige Aussparung 11 definiert vorzugsweise eine ringförmige Öffnung 12 im Gehäuseteil, wobei die ringförmige Öffnung zwischen einem ersten ringförmigen Rand 12a des Gehäuseteils und einem zweiten ringförmigen Rand 12b des Gehäuseteils gebildet ist. Das elastische Element 1a, ist zwischen dem ersten ringförmigen Rand 12a und dem zweiten ringförmigen Rand 12b einklemmbar.

Wenn das elastische Element 1a mit der ersten Seitenfläche (vgl. 16a in Fig. 5B, 7C) zugewandt zu der Innenfläche durch die Öffnung 12 in die Aussparung 11 eingeführt und in der Aussparung 11 eingeklemmt wird, wird zwischen der Innenfläche und dem elastischen Element 1a der erste Druckraum 4 gebildet. Das erfindungsgemäße elastische Element hat dabei die eingangs erwähnten Mittel, die eine verlässliche und effektive Abdichtung beim Anschluss 11 erlauben. Diese Mittel werden im Zusammenhang mit den Figuren 7 bis 8 näher erläutert.

Wie in den Figuren 5C und 5D gezeigt, erstreckt sich das dargestellte elastische Element 1a der Feder 1 von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in

Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen dem elastischen Element 1a und ein oder mehreren der Anlageflächen 101, 102 jeweils ein oder mehrere weitere Komponenten befinden, über die das elastische Element 1a seine Federkraft auf die Anlageflächen 101, 102 ausübt.

Wie in Figuren 5B, 5D ersichtlich, wird das elastische Element 1a in der Aussparung 11 zwischen Innenseiten des Gehäuseteils 3a eingeklemmt. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an Innenflächen des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung des elastischen Elements 1a in der Klemmebene bzw. in radialer Richtung der ringförmigen Aussparung größer sein kann als die Ausdehnung des durch das Gehäuseteil definierten Innenraums, kann die Platte 1a im drucklosen Ausgangszustand verbogen bzw. vorgespannt sein.

Figur 6 zeigt eine Ausführung eines Gehäuseteils 3a, 3b einer nach innen gerichteten erfindungsgemäßen pneumatische Klemm- und/oder Bremsvorrichtung 10. Figuren 7A bis 7C zeigen eine Ausführung des erfindungsgemäßen elastischen Elements 1a, 1b. Figur 8 zeigt ein Ausschnitt eines Querschnitts einer erfindungsgemäßen Klemm- und/oder Bremsvorrichtung mit zwei solchen erfindungsgemäßen elastischen Elementen 1a, 1b.

Das in Fig. 6 dargestellte Gehäuseteil 3a, 3b umfasst eine ringförmige Aussparung 11 mit der Gehäuseinnenfläche 105. Ebenso dargestellt sind die beiden Gehäuseanschlüsse I, II und das Klemmelement 8. In die ringförmige Aussparung 11 wird das elastische Element 1a, 1b nach Figur 7 derart eingelegt, dass die Anschlussdichtung 15 der Dichtungsschicht 17 den Anschluss 11 abdichtet und der Bereich 25 an dem Anschluss I angeordnet ist. Ferner wird das elastische Element mit der Dichtungsschicht 17 nach oben in die Aussparung 11 eingelegt, sodass die erste Seitenfläche 16a der Federplatte 16 des elastischen Elements 1a, 1b der Innenfläche 105 zugewandt ist. Das elastische Element wird in der Aussparung 11 eingeklemmt. Sodann werden zwei solcher Komponenten umfassend Gehäuseteil 3a, 3b mit eingeklemmten elastischen Element 1a, 1b so miteinander befestigt, wie in Fig. 5A, 8 gezeigt.

Wie in Figuren 7A bis 7C gezeigt umfasst das erfindungsgemäße elastische Element eine Federplatte 16 mit einer ersten Seitenfläche 16a und einer der ersten Seitenfläche 16a abgewandten, zweiten Seitenfläche 16b; eine auf der zweiten Seitenfläche 16b der Federplatte 16 aufgebrachte Dichtungsschicht 17 aus einem elastischen Material, die Dichtungsschicht 17 umfassend: einen entlang eines Umfangs der Federplatte 16 verlaufenden äußeren Rand 18; und einen sich an den äußeren Rand 18 der Dichtungsschicht 17 nach innen angrenzenden, und entlang zumindest eines Teils des Umfangs der Federplatte 16 verlaufenden, ersten Bereich 19, der gegenüber dem Rand 18 eine geringere Dicke aufweist; wobei der erste Bereich 19 entlang des Umfangs U der Federplatte 16 einen ersten Abschnitt 19a und einen zweiten, an den ersten Abschnitt (in Umfangsrichtung U) angrenzen Abschnitt 19b aufweist, wobei der erste Abschnitt 19a eine größere Dicke aufweist als der zweite Abschnitt 19b.

Wie in Figuren 7A, 7B gezeigt, kann die Dichtungsschicht 17 ferner optional einen sich an den ersten Bereich 19 der Dichtungsschicht 17 nach innen angrenzenden, und entlang zumindest eines Teils des Umfangs U der Federplatte 16 verlaufenden, zweiten Bereich 20 umfassen, wobei die Dicke des zweite Bereichs 20 der Dichtungsschicht 17 vorzugsweise mindestens so groß ist wie die Dicke des ersten Abschnitts 19a des ersten Bereichs 19 (vgl. Fig. 7C in der die Dicke des ersten Abschnitts 19a im Wesentlichen so groß ist wie die Dicke des zweiten Bereichs 20).

Wie in Figur 7B gezeigt kann eine Ausdehnung x des ersten Abschnitts 19a des ersten Bereichs 19 entlang des Umfangs U der Federplatte 16 zum äußeren Rand 18 hin, vorzugsweise kontinuierlich, abnehmen.

Wie in Fig. 7A gezeigt sind Federplatte 16 und die Dichtungsschicht 17 jeweils ringförmig ausgestaltet, wobei die Dichtungsschicht 17 vorzugsweise ferner umfasst: einen weiteren, inneren Rand 21 entlang des Umfangs u des inneren Kreises des Rings; einen sich nach außen an den inneren Rand 21 der Dichtungsschicht 17 angrenzenden, und entlang zumindest eines Teils des Umfangs u des inneren Kreises verlaufenden, dritten Bereich 22, der gegenüber dem inneren Rand 21 eine geringere Dicke aufweist; wobei der dritte Bereich 22 entlang des Umfangs u des Kreises einen dritten Abschnitt 19c und einen vierten, an den dritten Abschnitt (in Umfangsrichtung u) angrenzen Abschnitt 19d aufweist, wobei der dritte Abschnitt 19c eine größere Dicke aufweist als der vierte Abschnitt 19d. der dritte Abschnitt 19c kann in Form und/oder Ausdehnung x analog zu dem ersten Abschnitt 19a wie in Fig. 7B dargestellt ausgestaltet sein.

Der besseren Darstellung halber hier nicht gezeigt, kann der erste Bereich 19 entlang des Umfangs U der Federplatte 16 eine Vielzahl solcher aneinander angrenzender ersten und zweiten Abschnitte 19a, 19b aufweisen. Alternativ oder zusätzlich kann der dritte Bereich 22 entlang des Umfangs u des inneren Kreises eine Vielzahl solcher aneinander angrenzender dritten und vierten Abschnitte 19a, 19b aufweisen.

Wie in der Zusammenschau der Figuren 5A, 7 und 8 ersichtlich, ist die Dicke des ersten Abschnitts 19a des ersten Bereichs 19 der Dichtungsschicht 17 zumindest eines der elastischen Elemente 1a, 1b in der Vorrichtung 10 derart ausgewählt, dass bei Belüften des Druckraums 2 oder Beaufschlagung des Druckraums 2 mit Überdruck ein Verdrängen des (hier äußeren) Rands 18 der Dichtungsschicht 17 des zumindest einen elastischen Elements 1a, 1b zumindest gehemmt oder gar gänzlich unterbunden wird. Dadurch wird die Dichtheit im Bereich des Randes der Dichtungsschicht erhöht, ohne Zusatzkomponenten in die Gehäuseteile einzubauen.

Solche Zusatzkomponenten, die durch die Erfindung entbehrlich werden, können Druckstücke (hier nicht in Fig. 8 dargestellt) sein, die (hier radial von außen) gegen den äußeren Rand 18 drücken würden, um dessen Wölbung radial nach außen hin zu hemmen. Diese Druckstücke würden mittels stirnseitig angebrachter Mauselöscher 30, 31 in die Gehäuseteile 3a, 3b eingeführt werden. Solche Löcher 30, 31 würden ein aufwändiges Erodieren und Bohren erfordern und spezielle strukturelle Anpassungen für die Druckstücke in den Gehäuseteilen nötig machen. Dies würde den Herstellungsprozess komplizierter und teurer werden lassen. Auch ist es günstiger und einfacher lediglich Bohrung für Befestigungsmittel und Anschlüsse in Richtung der Achse 9 (vergleiche Figur 5A) in die Gehäuseteile einzubringen statt zusätzlich stirnseitig in radialer Richtung (vergleiche R in Figur 5A) Bohrungen durchzuführen.

Durch die hier beschriebenen Mitteln einzeln und in Kombination kann die gesteigerte Abdichtung im Bereich der ein oder mehreren Ränder 18, 21 der Dichtungsschicht 17 des elastischen Elements 1a, 1b erzielt werden, bei gleichzeitig minimale Anpassungen in der Dichtungsschicht 17 und ohne Anpassung in den Gehäuseteilen 3a, 3b. Dies ermöglicht einen sicheren Betrieb der Klemm- und/oder Bremsvorrichtung 10 ohne die Dynamik der Vorrichtung negativ zu beeinträchtigen.

In der Beschreibung und in den Figuren sind bevorzugte Ausführungsformen der durch die beigefügten Ansprüche beanspruchten Erfindung beschrieben.

## Patentansprüche

1. Ein vorzugsweise ringförmiges elastisches Element (1a, 1b) für eine Klemm- und/oder Bremsvorrichtung, umfassend:
eine Federplatte (16) mit einer ersten Seitenfläche (16a) und einer der ersten Seitenfläche (16a) abgewandten, zweiten Seitenfläche (16b);
eine auf der zweiten Seitenfläche (16b) der Federplatte (16) aufgebrachte Dichtungsschicht (17) aus einem elastischen Material, die Dichtungsschicht (17) umfassend:
einen entlang eines Umfangs der Federplatte (16) verlaufenden Rand (18); und
einen sich an den Rand (18) der Dichtungsschicht (17) angrenzenden, und entlang zumindest eines Teils des Umfangs der Federplatte (16) verlaufenden, ersten Bereich (19), der gegenüber dem Rand (18) eine geringere Dicke aufweist;
**dadurch gekennzeichnet, dass**
der erste Bereich (19) entlang des Umfangs (U) der Federplatte (16) einen ersten Abschnitt (19a) und einen zweiten, an den ersten Abschnitt angrenzen Abschnitt (19b) aufweist, wobei der erste Abschnitt (19a) eine größere Dicke aufweist als der zweite Abschnitt (19b).

2. Das elastische Element von Anspruch 1, wobei die Dichtungsschicht (17) ferner einen sich an den ersten Bereich (19) der Dichtungsschicht (17) angrenzenden, und entlang zumindest eines Teils des Umfangs (U) der Federplatte (16) verlaufenden, zweiten Bereich (20) umfasst, wobei die Dicke des zweite Bereichs (20) der Dichtungsschicht (17) mindestens so groß ist wie die Dicke des ersten Abschnitts (19a) des ersten Bereichs (19).

3. Das elastische Element von Anspruch 1 oder 2, wobei eine Ausdehnung (x) des ersten Abschnitts (19a) des ersten Bereichs (19) entlang des Umfangs (U) der Federplatte (16) zum Rand (18) hin, vorzugsweise kontinuierlich, abnimmt.

4. Das elastische Element nach irgendeinem der vorangehenden Ansprüche, wobei die Federplatte (16) und die Dichtungsschicht (17) ringförmig sind, wobei die Dichtungsschicht (17) vorzugsweise ferner umfasst:
einen weiteren Rand (21) entlang des Umfangs (u) des inneren oder äußeren Kreises des Rings;
einen sich an den weiteren Rand (21) der Dichtungsschicht (17) angrenzenden, und entlang zumindest eines Teils des Umfangs (u) des Kreises verlaufenden, dritten Bereich (22), der gegenüber dem weiteren Rand (21) eine geringere Dicke aufweist;
wobei der dritte Bereich (22) entlang des Umfangs des Kreises einen dritten Abschnitt (19c) und einen vierten, an den dritten Abschnitt angrenzen Abschnitt (19d) aufweist, wobei der dritte Abschnitt (19c) eine größere Dicke aufweist als der vierte Abschnitt.

5. Das elastische Element nach irgendeinem der vorangehenden Ansprüche, wobei der erste Bereich (19) entlang des Umfangs (U) der Federplatte (16) eine Vielzahl solcher aneinander angrenzender ersten und zweiten Abschnitte (19a, 19b) aufweist und/oder wobei der dritte Bereich (22) entlang des Umfangs (u) des Kreises eine Vielzahl solcher aneinander angrenzender dritten und vierten Abschnitte (19a, 19b) aufweist.

6. Eine Klemm- und/oder Bremsvorrichtung (10) zum Klemmen und/oder Bremsen eines zu klemmenden und/oder bremsenden Objekts, umfassend:
ein erstes elastisches Element (1a) nach irgendeinem der vorangehenden Ansprüche und ein zweites elastisches Element (1b) nach irgendeinem der vorangehenden Ansprüche;
ein Gehäuse (3) umfassend ein erstes Gehäuseteil (3a) mit einer Innenfläche (105) und ein zweites Gehäuseteil (3b) mit einer Innenfläche (105), wobei die Gehäuseteile derart zueinander angeordnet und miteinander befestigt sind, dass die Innenflächen (105) der Gehäuseteile (3a, 3b) zusammen einen Innenraum innerhalb des Gehäuses (3) abgrenzen;
ein oder mehrere Klemmelemente (8), wobei jedes Klemmelement eine Klemmfläche (7) aufweist;
eine in dem Innenraum angeordnete Feder (1) umfassend das erste elastische Element (1a) und das zweite elastische Element (1a), wobei die Federplatte (16) des ersten elastischen Elements (1a) mit dessen erster Seitenfläche (16a) zugewandt zu der Innenfläche (105) des ersten Gehäuseteils (3a) in dem Innenraum eingeklemmt ist, und wobei die Federplatte (16) des zweiten elastischen Elements (1a, 1b) mit dessen erster Seitenfläche (16a) zugewandt zu der Innenfläche (105) des zweiten Gehäuseteils (3b) in dem Innenraum eingeklemmt ist, so dass in dem Innenraum ein Druckraum (2) zwischen den Dichtungsschichten (17) der elastischen Elemente (1a, 1b) gebildet wird, wobei der Druckraum (2) entlüftbar ist und belüftbar oder mit Überdruck eines dem Gehäuse zuführbaren Druckmediums beaufschlagbar ist;
wobei die Feder (1) ausgelegt ist, dass bei Be- oder Entlüften des Druckraums (2) oder Beaufschlagung des Druckraums (2) mit Überdruck, eine Biegung mindestens einer der Federplatten (16) der elastischen Elemente (1a, 1b) veränderbar ist und dadurch die Vorrichtung (10) zwischen einem geöffneten Zustand, in dem ein zu klemmendes Objekt (5) von den ein oder mehreren Klemmflächen (7) beabstandet ist, und einem geschlossenen Zustand, in dem mindestens eine der ein oder mehreren Klemmflächen (7) eine Klemm- und/oder Bremskraft auf das Objekt (5) übertragen, wechselt; und wobei die Dicke des ersten Abschnitts (19a) des ersten Bereichs (19) der Dichtungsschicht (17) zumindest eines der elastischen Elemente (1a, 1b) derart ausgewählt ist, dass bei Belüften des Druckraums (2) oder Beaufschlagung des Druckraums (2) mit Überdruck ein Verdrängen des Rands (18) der Dichtungsschicht (17) des zumindest einen elastischen Elements (1a, 1b) zumindest gehemmt wird.

7. Die Klemm- und/oder Bremsvorrichtung (10) nach Anspruch 6, wobei die Federplatten (16) der elastischen Elemente (1a, 1b) derart in dem Innenraum eingeklemmt sind, dass die Ränder (18) der Dichtungsschichten (17) der elastischen Elemente (1a, 1b) aufeinander aufliegen.

8. Die Klemm- und/oder Bremsvorrichtung (10) nach irgendeinem der vorangehenden Ansprüche, wobei der Druckraum (2) innerhalb der Feder (1) zwischen den zweiten Seitenflächen (16b) der Federplatten (16) der elastischen Elementen (1a, 1b) angeordnet ist.

9. Die Klemm- und/oder Bremsvorrichtung (10) nach irgendeinem der vorangehenden Ansprüche, wobei der erste Abschnitt (19a) der Dichtungsschicht (17) mindestens eines der elastischen Elemente (1a, 1b) auf einer Geraden angeordnet ist mit einer Anschlussdichtung (15), der Dichtungsschicht (17) des mindestens einen der elastischen Elemente (1a, 1b), für einen Gehäuseanschluss (II) der Klemm- und/oder Bremsvorrichtung (10) zum Beaufschlagen des Druckraumes (2) der Klemm- und/oder Bremsvorrichtung (10) mit einem Druckmedium.

10. Die Klemm- und/oder Bremsvorrichtung (10) nach irgendeinem der vorangehenden Ansprüche, wobei zwischen den ersten Seitenflächen (16a) der Federplatten (16) der elastischen Elementen (1a, 1b) und den Innenflächen (105) der Gehäuseteile (3a, 3b) ein weiterer Druckraum (4) gebildet wird.

11. Die Klemm- und/oder Bremsvorrichtung (10) nach Anspruch 10, wobei die erste Federplatte (16) des ersten elastischen Elements (1a) ausgelegt ist, durch das Beaufschlagen des weiteren Druckraums (4) mit Überdruck, ihre Biegung zu reduzieren um, bei Aufstützen des inneren oder äußeren Rands der ersten Federplatte (16) an der Innenfläche (105) des ersten Gehäuseteils, mit dem äußeren oder inneren Rand der ersten Federplatte (16) auf eines der Klemmelemente derart zu drücken, dass dadurch eine Übertragung der Klemm- und/oder Bremskraft von der Klemmfläche des Klemmelements auf das zu klemmende und/oder bremsende Objekt (5) bewirkt wird und die Vorrichtung (10) von dem geöffneten Zustand in den geschlossenen Zustand wechselt.

12. Die Klemm- und/oder Bremsvorrichtung (10) nach Anspruch 10 oder 11, wobei die Vorrichtung (10) derart ausgelegt ist, dass durch das Belüften des weiteren Druckraums (4) oder durch das Beaufschlagen des weiteren Druckraums (4) mit Überdruck, sich eines der Klemmelemente von einem Abschnitt einer der Innenflächen (105) entfernt und/oder sich die Biegung mindestens einer der Federplatten (16) der elastischen Elemente verringert, und dadurch die Vorrichtung (10) von dem geöffneten Zustand in den geschlossenen Zustand wechselt.

13. Die Klemm- und/oder Bremsvorrichtung (10) nach irgendeinem der vorangehenden Ansprüche 10 bis 12, wobei der erste Abschnitt (19a) der Dichtungsschicht (17) mindestens eines der elastischen Elemente (1a, 1b) im Bereich (25) eines Gehäuseanschlusses (I) der Klemm- und/oder Bremsvorrichtung (10) zum Beaufschlagen des weiteren Druckraumes (4) mit Überdruck angeordnet ist.

14. Die Klemm- und/oder Bremsvorrichtung (10) nach irgendeinem der vorangehenden Ansprüche, wobei die Klemm- und/oder Bremskraft bewirkt wird dadurch, dass sich der innere oder äußere Rand zumindest einer der Federplatten (16) der elastischen Elemente (1a, 1b) an einer der Innenflächen (105) abstützt und der äußere oder innere Rand (16a, 16b) der zumindest einen Federplatte (16) auf das Klemmelement drückt.

15. Die Klemm- und/oder Bremsvorrichtung (10) nach irgendeinem der vorangehenden Ansprüche, wobei die Vorrichtung (10) derart ausgelegt ist, dass durch das Belüften des Druckraums (2) oder durch das Beaufschlagen des Druckraums (2) mit Überdruck, sich eines der Klemmelemente (8) auf einen Abschnitt einer der Innenflächen (105) zubewegt und/oder sich die Biegung mindestens einer der Federplatten (16) der elastischen Elemente vergrößert, und dadurch die Vorrichtung (10) von dem geschlossenen Zustand in den geöffneten Zustand wechselt.

## Claims

1. A preferably annular elastic element (1a, 1b) for a clamping and/or braking device, comprising:
a spring plate (16) having a first side surface (16a) and a second side surface (16b) facing away from the first side surface (16a);
a sealing layer (17) made of an elastic material applied on the second side surface (16b) of the spring plate (16), the sealing layer (17) comprising:
an edge (18) extending along a circumference of the spring plate (16); and
a first region (19) adjoining the edge (18) of the sealing layer (17), said first region (19) extending along at least part of the circumference of the spring plate (16) and having a smaller thickness compared to the edge (18);
**characterized in that**
the first region (19) has a first portion (19a) along the circumference (U) of the spring plate (16) and a second portion (19b) adjoining the first portion, wherein the first portion (19a) has a greater thickness than the second portion (19b).

2. The elastic element of claim 1, wherein the sealing layer (17) further comprises a second region (20) adjoining the first region (19) of the sealing layer (17) and extending along at least part of the circumference (U) of the spring plate (16), wherein the thickness of the second region (20) of the sealing layer (17) is at least as great as the thickness of the first portion (19a) of the first region (19).

3. The elastic element of claim 1 or 2, wherein an extension (x) of the first portion (19a) of the first region (19) decreases, preferably continuously, along the circumference (U) of the spring plate (16) towards the edge (18).

4. The elastic element according to any one of the preceding claims, wherein the spring plate (16) and the sealing layer (17) are annular, wherein the sealing layer (17) preferably further comprises:
a further edge (21) along the circumference (u) of the inner or outer circle of the ring;
a third region (22) adjoining the further edge (21) of the sealing layer (17) and extending along at least part of the circumference (u) of the circle and having a smaller thickness compared to the further edge (21);
wherein the third region (22) has a third portion (19c) along the circumference of the circle and a fourth portion (19d) adjoining the third portion, wherein the third portion (19c) has a greater thickness than the fourth portion.

5. The elastic element according to any one of the preceding claims, wherein the first region (19) has a plurality of such adjoining first and second portions (19a, 19b) along the circumference (U) of the spring plate (16) and/or wherein the third region (22) has a plurality of such adjoining third and fourth portions (19a, 19b) along the circumference (u) of the circle.

6. A clamping and/or braking device (10) for clamping and/or braking an object to be clamped and/or braked, comprising:
a first elastic element (1a) according to any one of the preceding claims and a second elastic element (1b) according to any one of the preceding claims;
a housing (3) comprising a first housing part (3a) having an inner surface (105) and a second housing part (3b) having an inner surface (105), wherein the housing parts are arranged with respect to each other and fixed to each other such that the inner surfaces (105) of the housing parts (3a, 3b) together delimit an inner space within the housing (3);
one or more clamping elements (8), wherein each clamping element has a clamping surface (7);
a spring (1) arranged in the inner space comprising the first elastic element (1a) and the second elastic element (1a), wherein the spring plate (16) of the first elastic element (1a) is clamped with its first side surface (16a) facing the inner surface (105) of the first housing part (3a) in the inner space, and
wherein the spring plate (16) of the second elastic element (1a, 1b) is clamped with its first side surface (16a) facing the inner surface (105) of the second housing part (3b) in the inner space, so that a pressure space (2) is formed in the inner space between the sealing layers (17) of the elastic elements (1a, 1b), wherein the pressure space (2) is ventable and aeratable or can be subjected to overpressure of a pressure medium that is suppliable to the housing;
wherein the spring (1) is designed such that, when the pressure space (2) is vented or aerated or the pressure space (2) is subjected to overpressure, a bending of at least one of the spring plates (16) of the elastic elements (1a, 1b) is changable and thereby the device (10) changes between an open state, in which an object (5) to be clamped is spaced apart from the one or more clamping surfaces (7), and a closed state, in which at least one of the one or more clamping surfaces (7) transmits a clamping and/or braking force to the object (5); and
wherein the thickness of the first portion (19a) of the first region (19) of the sealing layer (17) of at least one of the elastic elements (1a, 1b) is selected such that, when the pressure space (2) is aerated or the pressure space (2) is subjected to overpressure, a displacement of the edge (18) of the sealing layer (17) of the at least one elastic element (1a, 1b) is at least inhibited.

7. The clamping and/or braking device (10) according to claim 6, wherein the spring plates (16) of the elastic elements (1a, 1b) are clamped in the inner space such that the edges (18) of the sealing layers (17) of the elastic elements (1a, 1b) rest on one another.

8. The clamping and/or braking device (10) according to any one of the preceding claims, wherein the pressure space (2) is arranged within the spring (1) between the second side surfaces (16b) of the spring plates (16) of the elastic elements (1a, 1b).

9. The clamping and/or braking device (10) according to any one of the preceding claims, wherein the first portion (19a) of the sealing layer (17) of at least one of the elastic elements (1a, 1b) is arranged on a straight line with a connection seal (15), the sealing layer (17) of the at least one of the elastic elements (1a, 1b), for a housing connection (II) of the clamping and/or braking device (10) for subjecting the pressure space (2) of the clamping and/or braking device (10) to a pressure medium.

10. The clamping and/or braking device (10) according to any one of the preceding claims, wherein a further pressure space (4) is formed between the first side surfaces (16a) of the spring plates (16) of the elastic elements (1a, 1b) and the inner surfaces (105) of the housing parts (3a, 3b).

11. The clamping and/or braking device (10) according to claim 10, wherein the first spring plate (16) of the first elastic element (1a) is designed, by subjecting the further pressure space (4) to overpressure, to reduce its bending in order, when the inner or outer edge of the first spring plate (16) is supported on the inner surface (105) of the first housing part, to press with the outer or inner edge of the first spring plate (16) onto one of the clamping elements such that a transmission of the clamping and/or braking force from the clamping surface of the clamping element to the object (5) to be clamped and/or braked is thereby effected and the device (10) changes from the open state to the closed state.

12. The clamping and/or braking device (10) according to claim 10 or 11, wherein the device (10) is designed such that, by aerating the further pressure space (4) or by subjecting the further pressure space (4) to overpressure, one of the clamping elements moves away from a portion of one of the inner surfaces (105) and/or the bending of at least one of the spring plates (16) of the elastic elements is reduced, and thereby the device (10) changes from the open state to the closed state.

13. The clamping and/or braking device (10) according to any one of the preceding claims 10 to 12, wherein the first portion (19a) of the sealing layer (17) of at least one of the elastic elements (1a, 1b) is arranged in the region (25) of a housing connection (I) of the clamping and/or braking device (10) for subjecting the further pressure space (4) to overpressure.

14. The clamping and/or braking device (10) according to any one of the preceding claims, wherein the clamping and/or braking force is effected by the inner or outer edge of at least one of the spring plates (16) of the elastic elements (1a, 1b) being supported on one of the inner surfaces (105) and the outer or inner edge (16a, 16b) of the at least one spring plate (16) pressing onto the clamping element.

15. The clamping and/or braking device (10) according to any one of the preceding claims, wherein the device (10) is designed such that, by aerating the pressure space (2) or by subjecting the pressure space (2) to overpressure, one of the clamping elements (8) moves towards a portion of one of the inner surfaces (105) and/or the bending of at least one of the spring plates (16) of the elastic elements is increased, and thereby the device (10) changes from the closed state to the open state.

## Revendications

1. Élément élastique (1a, 1b), de préférence de forme annulaire, pour un dispositif de serrage et/ou de freinage, comprenant :
une plaque à ressort (16) dotée d'une première surface latérale (16a) et d'une deuxième surface latérale (16b) opposée à la première surface latérale (16a) ;
une couche d'étanchéité (17) en matériau élastique appliquée sur la deuxième surface latérale (16b) de la plaque à ressort (16), la couche d'étanchéité (17) comprenant :
un bord (18) s'étendant le long d'une circonférence de la plaque à ressort (16) ; et
une première zone (19) adjacente au bord (18) de la couche d'étanchéité (17) et s'étendant le long d'au moins une partie de la circonférence de la plaque à ressort (16), la première zone présentant une épaisseur inférieure à celle du bord (18) ;
**caractérisé en ce que**
la première zone (19) présente, le long de la circonférence (U) de la plaque à ressort (16), une première partie (19a) et une deuxième partie (19b) adjacente à la première partie, la première partie (19a) présentant une épaisseur supérieure à celle de la deuxième partie (19b).

2. Élément élastique selon la revendication 1, la couche d'étanchéité (17) comprenant en outre une deuxième zone (20) adjacente à la première zone (19) de la couche d'étanchéité (17) et s'étendant le long d'au moins une partie de la circonférence (U) de la plaque à ressort (16), l'épaisseur de la deuxième zone (20) de la couche d'étanchéité (17) étant au moins égale à celle de la première partie (19a) de la première zone (19).

3. Élément élastique selon la revendication 1 ou 2, dans lequel une extension (x) de la première partie (19a) de la première zone (19) le long de la circonférence (U) de la plaque à ressort (16) diminue vers le bord (18), de préférence de manière continue.

4. Élément élastique selon l'une quelconque des revendications précédentes, dans lequel la plaque à ressort (16) et la couche d'étanchéité (17) sont annulaires, la couche d'étanchéité (17) comprenant de préférence, en outre :
un autre bord (21) le long de la circonférence (u) du cercle intérieur ou extérieur de l'anneau ;
une troisième zone (22) adjacente à l'autre bord (21) de la couche d'étanchéité (17) et s'étendant le long d'au moins une partie de la circonférence (u) du cercle, qui présente une épaisseur inférieure à celle de l'autre bord (21) ;
la troisième zone (22) présentant, le long de la circonférence du cercle, une troisième partie (19c) et une quatrième partie (19d) adjacente à la troisième partie, la troisième partie (19c) présentant une épaisseur supérieure à celle de la quatrième partie.

5. Élément élastique selon l'une quelconque des revendications précédentes, dans lequel la première zone (19) le long de la circonférence (U) de la plaque à ressort (16) présente une pluralité de telles premières et deuxièmes parties (19a, 19b) adjacentes les unes aux autres et/ou dans lequel la troisième zone (22) comprend, le long de la circonférence (u) du cercle, une pluralité de troisièmes et quatrièmes parties (19a, 19b) adjacentes les unes aux autres.

6. Dispositif de serrage et/ou de freinage (10) destiné à serrer et/ou freiner un objet à serrer et/ou freiner, comprenant :
un premier élément élastique (1a) selon l'une quelconque des revendications précédentes et un deuxième élément élastique (1b) selon l'une quelconque des revendications précédentes ;
un boîtier (3) comprenant une première partie de boîtier (3a) avec une surface intérieure (105) et une deuxième partie de boîtier (3b) avec une surface intérieure (105), les parties de boîtier étant agencées l'une par rapport à l'autre et fixées l'une à l'autre de telle sorte que les surfaces intérieures (105) des parties de boîtier (3a, 3b) délimitent ensemble un espace intérieur à l'intérieur du boîtier (3) ;
un ou plusieurs éléments de serrage (8), chaque élément de serrage présentant une surface de serrage (7) ;
un ressort (1) agencé dans l'espace intérieur, comprenant le premier élément élastique (1a) et le deuxième élément élastique (1a), la plaque à ressort (16) du premier élément élastique (1a) étant serrée avec sa première surface latérale (16a) tournée vers la surface intérieure (105) de la première partie de boîtier (3a) dans l'espace intérieur, et la plaque à ressort (16) du deuxième élément élastique (1a, 1b) étant serrée avec sa première surface latérale (16a) tournée vers la surface intérieure (105) de la deuxième partie de boîtier (3b) dans l'espace intérieur de sorte qu'une chambre de pression (2) est formée dans l'espace intérieur entre les couches d'étanchéité (17) des éléments élastiques (1a, 1b),
la chambre de pression (2) pouvant être ventilée et aérée ou soumise à une surpression d'un fluide sous pression pouvant être amené au boîtier ;
le ressort (1) étant conçu de telle sorte que, lors de l'aération ou de la ventilation de la chambre de pression (2) ou lors de l'application d'une surpression à la chambre de pression (2), la flexion d'au moins l'une des plaques à ressort (16) des éléments élastiques (1a, 1b) peut être modifiée, ce qui permet de faire basculer le dispositif (10) entre un état ouvert, dans lequel un objet à serrer (5) est espacé de la ou des surfaces de serrage (7), et un état fermé, dans lequel au moins une de la ou des surfaces de serrage (7) transmet une force de serrage et/ou de freinage à l'objet (5) ; et dans lequel l'épaisseur de la première partie (19a) de la première zone (19) de la couche d'étanchéité (17) d'au moins un des éléments élastiques (1a, 1b) est choisie de telle sorte que, lors de l'aération de la chambre de pression (2) ou de l'application d'une surpression à la chambre de pression (2), le déplacement du bord (18) de la couche d'étanchéité (17) de l'au moins un élément élastique (1a, 1b) soit à tout le moins inhibé.

7. Dispositif de serrage et/ou de freinage (10) selon la revendication 6, dans lequel les plaques à ressort (16) des éléments élastiques (1a, 1b) sont serrées dans l'espace intérieur de telle sorte que les bords (18) des couches d'étanchéité (17) des éléments élastiques (1a, 1b) reposent les uns sur les autres.

8. Dispositif de serrage et/ou de freinage (10) selon l'une quelconque des revendications précédentes, dans lequel la chambre de pression (2) est agencée à l'intérieur du ressort (1) entre les deuxièmes surfaces latérales (16b) des plaques à ressort (16) des éléments élastiques (1a, 1b).

9. Dispositif de serrage et/ou de freinage (10) selon l'une quelconque des revendications précédentes, dans lequel la première partie (19a) de la couche d'étanchéité (17) d'au moins l'un des éléments élastiques (1a, 1b) est agencée sur une ligne droite avec un joint de raccordement (15) de la couche d'étanchéité (17) d'au moins l'un des éléments élastiques (1a, 1b), pour un raccordement au boîtier (II) du dispositif de serrage et/ou de freinage (10) afin d'alimenter la chambre de pression (2) du dispositif de serrage et/ou de freinage (10) avec un fluide sous pression.

10. Dispositif de serrage et/ou de freinage (10) selon l'une quelconque des revendications précédentes, dans lequel une autre chambre de pression (4) est formée entre les premières surfaces latérales (16a) des plaques à ressort (16) des éléments élastiques (1a, 1b) et les surfaces intérieures (105) des parties de boîtier (3a, 3b).

11. Dispositif de serrage et/ou de freinage (10) selon la revendication 10, dans lequel la première plaque à ressort (16) du premier élément élastique (1a) est conçue pour réduire sa flexion en soumettant l'autre chambre de pression (4) à une surpression afin, lorsque le bord intérieur ou extérieur de la première plaque à ressort (16) s'appuie contre la surface intérieure (105) de la première partie du boîtier, que le bord extérieur ou intérieur de la première plaque à ressort (16) appuie sur l'un des éléments de serrage de telle sorte qu'il en résulte une transmission de la force de serrage et/ou de freinage de la surface de serrage de l'élément de serrage à l'objet à serrer et/ou à freiner (5) et que le dispositif (10) passe de l'état ouvert à l'état fermé.

12. Dispositif de serrage et/ou de freinage (10) selon la revendication 10 ou **11,** le dispositif (10) étant conçu de telle sorte que, par l'aération de l'autre chambre de pression (4) ou par l'application d'une surpression dans l'autre chambre de pression (4), l'un des éléments de serrage s'éloigne d'une partie de l'une des surfaces intérieures (105) et/ou la flexion d'au moins l'une des plaques à ressort (16) des éléments élastiques diminue, et que le dispositif (10) passe ainsi de l'état ouvert à l'état fermé.

13. Dispositif de serrage et/ou de freinage (10) selon l'une quelconque des revendications 10 à 12 précédentes, dans lequel la première partie (19a) de la couche d'étanchéité (17) d'au moins l'un des éléments élastiques (1a, 1b) est agencée dans la zone (25) d'un raccord de boîtier (I) du dispositif de serrage et/ou de freinage (10) pour appliquer une surpression à l'autre chambre de pression (4).

14. Dispositif de serrage et/ou de freinage (10) selon l'une quelconque des revendications précédentes, dans lequel la force de serrage et/ou de freinage est générée par le fait que le bord intérieur ou extérieur d'au moins l'une des plaques à ressort (16) des éléments élastiques (1a, 1b) s'appuie sur l'une des surfaces intérieures (105) et que le bord extérieur ou intérieur (16a, 16b) de l'au moins une plaque à ressort (16) appuie sur l'élément de serrage.

15. Dispositif de serrage et/ou de freinage (10) selon l'une quelconque des revendications précédentes, le dispositif (10) étant conçu de telle sorte que, par l'aération de la chambre de pression (2) ou par l'application d'une surpression à la chambre de pression (2), l'un des éléments de serrage (8) se déplace vers une partie de l'une des surfaces intérieures (105) et/ou la flexion d'au moins l'une des plaques à ressort (16) des éléments élastiques augmente, et que le dispositif (10) passe ainsi de l'état fermé à l'état ouvert.
